# EUROPEAN PATENT SPECIFICATION

(11) **EP 3 987 231 B1**
(45) Date of publication and mention of the grant of the patent: **01.05.2024**
(21) Application number: 20751672.5
(22) Date of filing: 24.06.2020
(51) Int. Cl.: F24C 15/32, F22B 1/28, F22G 1/16, F22B 37/46

(54) **APPARATUS FOR COOKING FOOD**
VORRICHTUNG ZUM KOCHEN VON LEBENSMITTELN
APPAREIL DE CUISSON DES ALIMENTS

(30) Priority: 24.06.2019 IT 201900009972
(43) Date of publication of application: 27.04.2022
(73) Proprietor: Atihc S.r.l., 37045 Legnago Verona (IT)
(72) Inventor: COLTRO, Marco, 37045 Legnago (VR) (IT); SUMAN, Alessio, 37045 Legnago (VR) (IT); VERZÈ, Ivan, 37045 Legnago (VR) (IT)
(74) Representative: Manzella & Associati
(86) International application number: PCT/IT2020/050158
(87) International publication number: WO 2020/261308

(56) References cited:
- GB-A- 2 010 078
- JP-A- 2005 065 847
- JP-A- 2007 010 190
- JP-A- 2013 181 719
- JP-A- 2014 159 951
- JP-A- 2016 020 800
- JP-A- 2017 101 910

## Description

### Technical field

The present invention relates to an apparatus for cooking food.

### Prior art

The use of different types of apparatuses for cooking food, which may be classified according to multiple criteria, such as, for example, the type of energy used, or based on the type of cooking used, has long been known.

A common type of apparatus is the convection oven, which uses hot air which circulates with a forced convection motion inside a cooking chamber, where the food to be heated or cooked is arranged.

A disadvantage related to thermal convection cooking concerns the fact that oxygen is present in the cooking chamber and this may cause oxidation of the vitamins contained in food at cooking temperatures, which are generally higher than 35° C. Furthermore, a thermal convection oven requires rather long cooking times and this feature, in combination with the above cooking temperatures, cause the degradation of the nutrients contained in the food.

In order to preserve the quality of the food, and, in particular, not to alter the nutritional properties of the food, apparatuses has been designed that enable alternative cooking methods, such as steam ovens, to be implemented.

Steam cooking has the advantage of limiting the degradation of the nutritional elements of food and improving the maintenance of aromas and aesthetic features.

A type of steam oven is illustrated in patent application EP 1970634.

Apparatuses for cooking food with superheated steam, generally called superheated steam ovens have also been designed.

A type of superheated steam oven comprises a casing which forms inside a cooking chamber in which the food is arranged. The casing is associated with a steam generator, which is connected to a steam superheater device. The steam superheater device is connected with the cooking chamber to introduce the heated steam into the chamber at a temperature higher than the boiling temperature, which is generally called superheated steam.

The application EP1790909 illustrates an example of a superheated steam oven comprising a casing which internally conforms a cooking chamber and a steam generator arranged outside the cooking chamber. The steam generator comprises a container, suitable for receiving a liquid to be heated, which is associated with a heater, made up of a series of heating elements mounted on an insulating substrate. A superheater device coupled with a recirculation fan is also associated with the cooking chamber outside. Further examples of superheated steam ovens are provided in JP2005 065847A, JP2014 159951A and JP2016 020800A.

Despite the advantages offered by ovens that enable steam cooking, the need to preserve the nutritional properties of the food to the greatest extent is felt.

### Disclosure

The present invention aims at solving the aforementioned problems by devising an apparatus for cooking food with superheated steam which allows the optimal preservation of the nutritional properties of the food and its healthiness.

The invention further aims at providing an apparatus for cooking food with superheated steam which is of a simple constructive and functional concept, which is certainly reliable in operation, versatile in use, and relatively inexpensive.

The mentioned aims are achieved, according to the present invention, by the apparatus for cooking food with superheated steam according to claim 1.

The apparatus for cooking food with superheated steam includes an external casing comprising inside a cooking chamber, suitable for containing one or more foods; a steam generating device associated with said casing, capable of vaporizing a liquid; a superheating device of said steam associated with said steam generating device, said superheating device being configured to heat said steam up to an operating temperature (T) higher than the boiling temperature of said liquid and to enable said superheated steam to come out towards said cooking chamber.

Said superheating device comprises a containment body, a support member, made of a non-electrically conductive material, which is arranged inside said containment body, said support member having at least one channel, passing through said support member, to enable the passage of said steam.

Said support member comprises at least one electrically conductive element, arranged in said at least one channel of said support member, said at least one electrically conductive element being powered, in use, by a source of electric energy to be heated to a temperature such as to emitting electromagnetic radiation, said steam being heated, in use, by said electromagnetic radiation by irradiation. It should be noted that heating the steam by irradiation allows the time for heating the steam up to the operating temperature to be reduced, thus the time necessary to introduce superheated steam into the cooking chamber is decreased. In this way, the time necessary for oxygen to come out from the cooking chamber is reduced, in an initial step, considering that oxygen is replaced more quickly by the introduced steam and, consequently, the oxidation of some components of food is eliminated or limited, such as, for example, vitamins and polyphenols, preserving the healthiness of foods.

Said steam generating device comprises a body comprising at least one heating element and at least one thermally conductive element, said at least one heating element being adapted to heat said liquid inserted, in use, inside said steam generating device, said heating element being also adapted to heat said thermally conductive element so as to store in said thermally conductive element a predetermined amount of energy to be used to generate steam. It should be noted that said at least one thermally conductive element, heated by the at least one heating element, enables the steam to be produced by direct contact with the liquid, decreasing the time necessary to generate steam, in an initial step of operation of the apparatus. Therefore, an injection of steam into the cooking chamber is obtained in a reduced time as well as a consequent reduction of the time necessary for the dislocation of oxygen from the cooking chamber, by replacement with the introduced steam. In particular, it should be noted that the combination of the steam generating device and the superheating device enables the time interval necessary for the generation of superheated steam to be optimized, in particular in an initial step of cooking, so as to quickly replace the oxygen present in the chamber with superheated steam. The configuration of the steam generating device, comprising at least one heating element and at least one electrically conductive element, makes the generation of steam faster and the fact that the superheating device comprises an electrically conductive element arranged in said at least one channel of said support member which is heated to a temperature such as to emit electromagnetic radiation, allows the steam supplied by the steam generating device to be superheated rapidly by irradiation. The steam generated by the steam generating device passes into at least one channel of the support member of the superheating device and is superheated by the electrically conductive element.

Preferably said steam generating device is associated with said superheating device through a connection means enabling the passage of said steam from said steam generating device to said superheating device.

Preferably said connection means comprise at least one conduit.

Preferably said at least one conduit connects outlet means of said steam generating device with an inlet means of said superheating device.

Preferably said steam generating device is spaced apart from said superheating device. The fact of providing a steam generation device spaced apart from said superheating device and connected by connection means facilitate maintenance operations and device control.

Preferably, said operating temperature, at which the steam in said superheating device is heated, is between 130° C and 600° C.

Preferably said electrically conductive element comprises an electrically conductive filament.

Preferably said electrically conductive element consists of an electrically conductive filament. The electrically conductive filament allows it to be heated up to a temperature suitable for heating by irradiation in optimized times.

Preferably said electrically conductive filament is made of a metallic material.

Preferably said electrically conductive filament is made of an alloy of metals.

Preferably said electrically conductive filament is made of a nickel-chromium alloy.

Preferably said nickel-chromium alloy comprises 80% nickel and 20% chromium.

Preferably said at least one electrically conductive element emits, in use, electromagnetic radiation having a wavelength in the infrared range.

Preferably said electrically conductive element is connected, by means of suitable terminals, to a source of electric energy.

Preferably said support member is made of a ceramic material.

Preferably said containment body is made of a metallic material.

Preferably, said support member has a plurality of said channels passing through said support member, to allow the passage of said steam.

Preferably said channels extend along a longitudinal direction of said support member.

Preferably, said channels each have a cylindrical shape.

Preferably said electrically conductive element comprises a series of longitudinal sections, arranged in the relative channels, and a series of transversal sections which connect the adjacent longitudinal sections.

Preferably said channels are regularly distributed in said support member.

Preferably said channels are distributed on the periphery of said support member.

According to an aspect of the invention, said channels shape respective grooves on an external surface of said support member.

Preferably, at least one spacer element is arranged between said external surface of said support member and an internal surface of said containment body, so that the contact may not be established between said electrically conductive element and said containment body. It should be noted, in fact, that one or more drops from the condensation of said steam may form between said external surface of said support member and said internal surface of said containment body. This may create a contact between the electrically conductive element and the containment body, which, in the event that the containment body is made of metal material, causes a short circuit.

According to a different aspect of the invention, said channels are closed laterally.

Advantageously, said containment body has a surface facing towards said support member, which, at least for a portion, is reflective, in order to reflect the radiations emitted by said electrically conductive element, in use, and to limit the dispersions of energy towards the outside of said containment body.

Preferably said surface facing towards said support member is subjected to a surface treatment which makes it reflective.

Preferably said surface treatment is electrolytic polishing.

Preferably, said containing body of said superheating device is inclined with respect to a substantially horizontal plane, in a mounting configuration, to facilitate the flow of the liquid deriving from the condensation of the steam.

Preferably said body of said steam generating device comprises a plurality of said heating elements, arranged alternately with said respective thermally conductive elements. The alternating arrangement of the heating elements and of the thermally conductive elements has the advantage of giving a compact configuration to the steam generating device and reduces its overall dimensions. Another important aspect is that such a compact alternating arrangement has the effect of reducing the internal volume of the casing that may be occupied by the liquid to keep the heating elements submerged. This compact configuration enables the volume of liquid necessary for proper operation to be decreased, therefore, it helps to speed up the generation of steam, mainly at an early stage of the cooking process, in order to quickly replace the oxygen with steam in the cooking chamber.

Preferably said heating elements are arranged alternately with respective said thermally conductive elements along a longitudinal direction.

Preferably said heating elements are alternated with respective said thermally conductive elements so that a stack configuration is obtained.

Preferably said body is box-shaped.

Preferably said body has a prismatic shape.

Preferably each of said heating elements comprises an electrical resistance.

Preferably said electric resistances are aligned along said longitudinal direction.

Preferably said electric resistances are equidistant with respect to each other.

Preferably each said electric resistance has a substantially flat spiral shape. This configuration of each electric resistance allows an optimal ratio between the generated power and the volume of introduced liquid to be obtained.

Preferably the value of the ratio between the generated power and the volume of introduced liquid is at least 8 W/gr of water in case in which the liquid used is water.

In practice, each spiral-shaped electric resistance occupies a reduced volume and, therefore, reduces the volume of liquid necessary to keep it submerged. At the same time, a further advantage offered by the configuration of the spiral resistances is that of exploiting their geometry, and in particular the length, to generate an increased power.

Finally, it is also to be considered that each spiral resistance offers a greater surface than that of a linear resistance of the same size and this makes it more resistant to thermal shock, making the steam generation device more rugged and, consequently, more durable.

It is to be noted, that the provision of a series of substantially flat spiral-shaped resistances and the alternating arrangement of these resistances to the thermally conductive elements so that a compact configuration is obtained, have the synergistic effect of optimizing even more the ratio between the generated power and the volume of the introduced liquid since the volume of liquid to be introduced into the casing is reduced and the increased power that the spiral resistances may generate is exploited. The reduction in the volume of liquid is related both to the compact configuration of each spiral resistance and to the alternate compact arrangement of the resistances with the thermally conductive elements. The reduction in the volume of required liquid involves a reduction in the time required to generate steam, in particular at an early stage of the cooking process, in order to quickly replace the oxygen present in the cooking chamber with steam.

Preferably each said thermally conductive element is made from a plate which extends transversely to said body. It is noted that the plate configuration of each thermally conductive element facilitates the stacking of the resistances and of the thermally conductive elements, contributing to make the configuration of the steam generating device even more compact.

Preferably, said apparatus also comprises recirculation means of the exhausted steam present, in use, in said cooking chamber, said recirculation means being communicating with said cooking chamber and being configured to convey said exhausted steam from said cooking chamber to said superheating device, so that said exhausted steam is heated up to said operating temperature and introduced into said cooking chamber.

It is to be noted that the provision of means of recirculation of the exhausted steam enables the energy consumption to be reduced since the amount of energy necessary to bring the exhausted steam to the operating temperature is lower than the energy necessary to bring the liquid to the state of superheated steam. More specifically, it is observed that to bring the exhausted steam into the superheating device at operating temperature, it is sufficient to supply it with the energy it previously transferred to the food, while, in order to obtain superheated steam starting from the liquid contained in the device for generating the steam, it is necessary to supply the energy to evaporate it and the energy to superheat it. The total energy for evaporation and superheating to be supplied to the liquid is higher than the energy transferred by the exhausted steam to the food.

The present invention also relates to a method for generating steam, which comprises the step of preparing said apparatus for cooking food with superheated steam and activating said at least one heating element to heat said at least one thermally conductive element until reaching a predetermined temperature, and storing in said at least one thermally conductive element a predetermined amount of energy.

Preferably said at least one thermally conductive element is heated to a temperature between 100° C and 600° C.

Preferably said at least one thermally conductive element is heated to a temperature lower than the Leidenfrost temperature.

Preferably the activation of said at least one heating element is interrupted when said heating temperature of said at least one thermally conductive element is reached.

Preferably the achievement of said heating temperature of said thermally conductive element and the deactivation of said at least one heating element are signaled to a user by a warning signal.

The method provides for inserting a liquid inside said steam generation device until a maximum quantity of liquid is reached and, simultaneously, generating steam by direct contact of said liquid with said at least one thermally conductive element, exploiting said predetermined quantity of stored energy.

Preferably, before said step of inserting said liquid, said at least one heating element is activated again.

The method provides, after a predetermined time interval from the beginning of said step of insertion of said liquid and before the end of said step of insertion of said liquid, for generating steam by direct contact of said liquid with said at least one thermally conductive element and by boiling said liquid.

Preferably said predetermined time interval from the beginning of said step of insertion of said liquid is between 30 and 80 seconds.

Preferably, in said step of generating steam by direct contact of said liquid with said at least one thermally conductive element and by boiling of said liquid, the boiling of said liquid occurs mainly thanks to the energy transferred by said at least one heating element.

Advantageously, at the end of said step of inserting said liquid, the method provides for generating steam by boiling said liquid by means of said at least one heating element and said at least one thermally conductive element.

It should be noted that the method for generating steam implemented by the apparatus makes it versatile as it is possible to generate steam by direct contact of the liquid with said at least one thermally conductive element, exploiting said predetermined quantity of stored energy and, therefore, rapidly generating steam, but it is also possible to generate steam by direct contact of said liquid with said at least one thermally conductive element and by boiling of said liquid, after a predetermined time interval from the beginning of said step of insertion of said liquid. In this way it is possible to select the most suitable steam generation mode for the type of product to be cooked.

Preferably, said step of inserting the liquid inside said steam generation device is carried out discontinuously.

Preferably, said step of inserting the liquid inside said steam generating device comprises a series of liquid injections.

Preferably between a liquid injection and a subsequent injection elapses a first time interval.

Preferably said first time interval is between 1 and 60 seconds.

Preferably each injection of the liquid takes place in a second time interval.

Preferably said second time interval is between 1 and 60 seconds.

Preferably said values of said first time interval and of said second time interval are stored in the memory of said control unit.

The present invention also relates to a computer program comprising instructions which, when the program is run by a computer, cause said apparatus to carry out the steps of activating said at least one heating element to heat said at least one thermally conductive element until reaching a predetermined temperature, and storing in said at least one thermally conductive element a predetermined amount of energy; inserting a liquid inside said steam generation device until a maximum quantity of liquid is reached and, simultaneously, generating steam by direct contact of said liquid with said at least one thermally conductive element, using said predetermined quantity of stored energy; after a predetermined time interval from the beginning of said step of insertion of said liquid and before the end of said step of insertion of said liquid, generating steam by direct contact of said liquid with said at least one thermally conductive element and by boiling of said liquid.

### Description of drawings

The details of the invention will become clearer from the detailed description of a preferred embodiment of the apparatus for cooking food with superheated steam according to the invention, illustrated only by way of non-limitative example in the accompanying drawings, wherein:

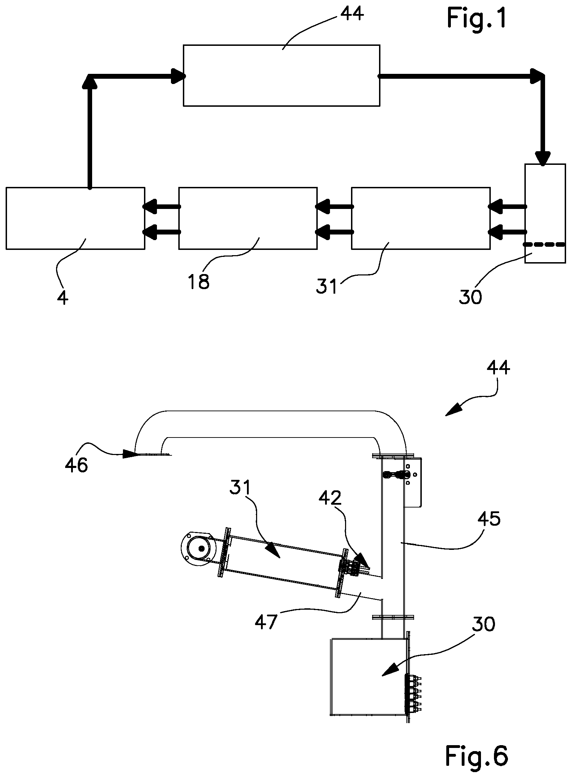

Figure 1 shows a block diagram of the apparatus object of the present invention;

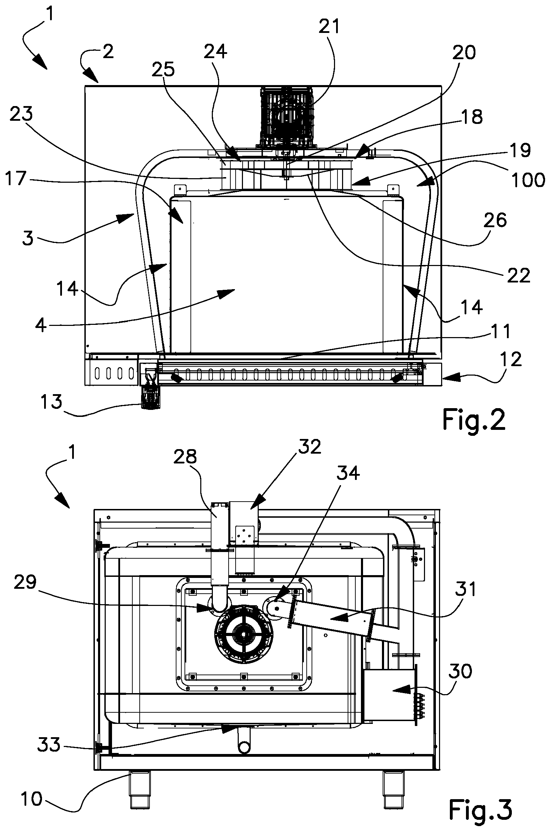

Figure 2 shows a top view of the apparatus according to the present invention, wherein an outer casing is shown in transparency;
Figure 3 shows a front view of the apparatus wherein the external casing is shown in transparency;
Figure 4 shows a perspective view of a detail of the apparatus;
Figure 5 shows a perspective view of the detail of the apparatus illustrated in Figure 4, wherein further components are visible;
Figure 6 shows a front view of some components of the apparatus in a configuration of assembly;

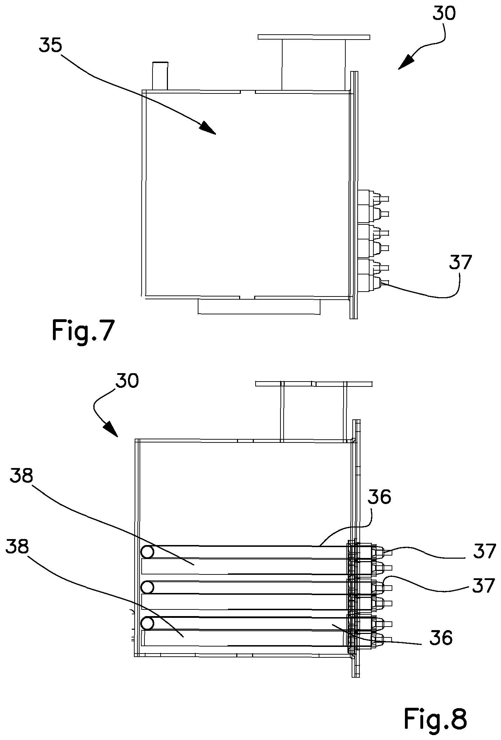

Figure 7 shows a front view of an enlarged detail shown in Figure 6;
Figure 8 shows a front view of the detail of Figure 7, wherein an external casing is shown in transparency;

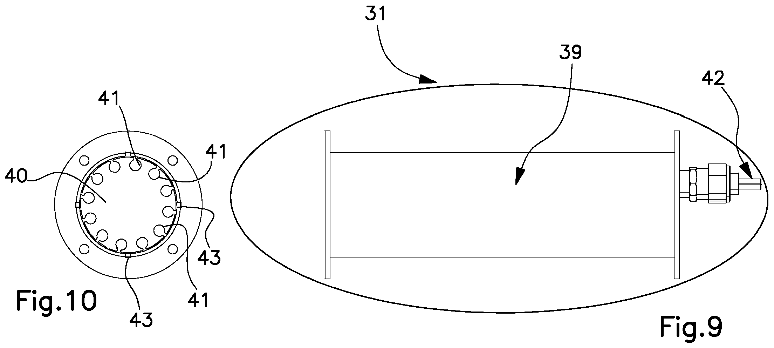

Figure 9 shows a side view of a different enlarged detail shown in Figure 6;
Figure 10 shows a front view of the detail illustrated in Figure 9.

### Best mode

With particular reference to these figures, the reference number 1 indicates the apparatus for cooking food with superheated steam according to the present invention, which is called apparatus, for simplicity.

The apparatus 1 comprises an external casing 2 comprising a compartment 3, suitable for containing one or more foods.

More specifically, the compartment 3 internally defines a cooking chamber 4 in which the food to be cooked or heated is arranged.

The casing 2 preferably has a prismatic shape but it is possible to provide for any other shape.

The compartment 3 preferably has a trapezoidal cross-section. The shape of the compartment 3, which is basically a trapezoidal-based prism, prevents the formation of areas of stagnation of a fluid contained inside thereof, thus facilitating the circulation of the fluid in the cooking chamber 4.

Advantageously, the compartment 3 has a cross section with a mixtilinear trapezoidal shape, that is, it comprises a series of straight sections and a series of curve arches, in which the straight sections are connected by the curve arches. The trapezoidal configuration of compartment 3 including the curve arches has the effect of minimizing the volume of compartment 3 and, therefore, of allowing oxygen to come out from compartment 3 in the shortest possible time. Furthermore, this configuration has the effect of preventing oxygen stagnation zones from forming in the corners, which may reduce the benefits of cooking with superheated steam. Finally, this configuration enables the exposure of a surface of minor extension to the flow of superheated steam, limiting the formation of condensation and helping the interaction between superheated steam and products.

The curved arches create rounded corners of compartment 3 and are present along the entire vertical development of said compartment 3.

The fluid includes steam during the operation step of the apparatus.

In an operating step of the apparatus, the fluid mainly comprises steam, or steam mixed with gas, such as mainly oxygen and nitrogen.

Preferably the steam used is water steam.

In particular, the compartment 3 is delimited by a first wall 5, which forms the base, a second top wall 6, opposed to the first wall 5, a third wall 7 and a fourth wall 8 mutually facing each other, which define the oblique sides of the trapezoidal based prism. The compartment 3 is also delimited by a further wall 9, substantially orthogonal to the first wall 5, which is considered as a rear wall in the following description.

The compartment 3, in use, is closed by a door associated with the casing 2, as specified below.

Preferably the walls 5, 6, 7, 8, 9 which delimit the compartment 3 are made as a single body. Alternatively, the walls 5, 6, 7, 8, 9 are tightly connected to each other.

The cooking chamber 4 may have a prismatic shape, even more preferably a parallelepiped shape.

The cooking chamber 4 is delimited by the base 5, by the top wall 6, by a protection member 26, arranged frontally to the rear wall 9 of compartment 3, and by a pair of conveying members 14, mounted inside the compartment 3. The conveyor members 14 and the protection member 26 are described below.

Between the compartment 3 and the cooking chamber 4 a region for distributing the fluid 100 is defined, which forms a guide path for the fluid flow towards the cooking chamber 4, in which the heating or cooking of the food take place in use.

A support means 10 may be associated with the casing 2, for example of the type of a series of feet, suitable for supporting the apparatus resting on a work surface.

The casing 2 comprises an access opening 11 at the cooking chamber 4, to enable a user to access the chamber 4. The access opening 11 is preferably made on a wall of the casing 2 arranged frontally with respect to the rear wall 9 of the compartment 3.

The access opening 11 is closed, during the operation of the apparatus, by a door 12, to isolate the cooking chamber 4 from the external environment and avoid heat dispersion.

The door 12 is hinged to the casing 2 or, alternatively, to the compartment 3, and is provided with a gripping member 13, preferably made by a handle, to facilitate the opening of the door 12.

Door 12 is made of a transparent material in order to allow viewing of the interior of the cooking chamber 4.

A control panel, not shown, is preferably associated with the external casing 2, comprising a series of controls, of the type of knobs or buttons, or a touch screen, to allow the switching on and off of the apparatus, as well as the adjustment of certain parameters such as, for example, the temperature or the cooking time.

The compartment 3 comprises a pair of conveying members 14, mounted spaced from relative opposite walls of the compartment 3, in particular from the third wall 7 and from the fourth wall 8.

A lateral portion of the distribution region 100 is delimited between each conveying member 14 and the relative wall 7, 8 of the compartment 3, the lateral portion being shaped so as to ensure an optimal distribution of the fluid inside the cooking chamber 4.

Each lateral portion of the distribution region 100 has a cross section which progressively decreases along the depth of the cooking chamber 4.

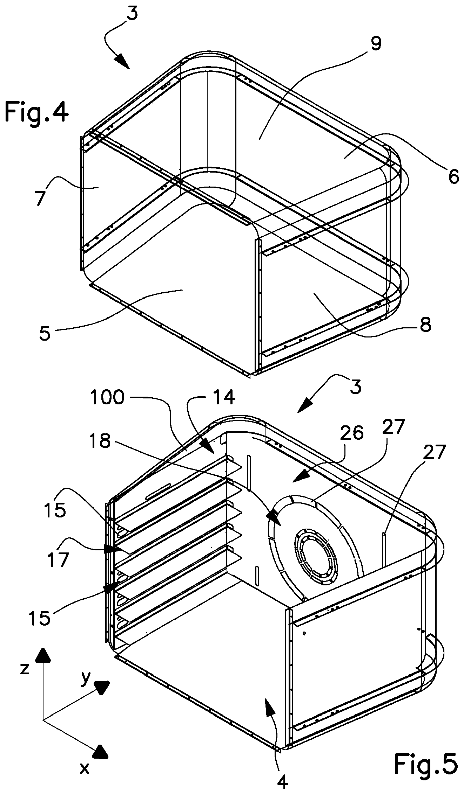

According to the spatial reference system illustrated in Figure 5, the depth of the cooking chamber 4 is a dimension substantially parallel to the y axis. Preferably each side portion of the distribution region 100 has a substantially trapezoidal plan.

The conformation of each lateral portion of the distribution region 100, in particular the progressive reduction of the cross-sectional area, allows an approximately constant speed of the fluid along the lateral portion to be obtained. In this way, a homogeneous distribution of the fluid in the chamber 4 is guaranteed, which is suitable to compensate for any lack of homogeneity in the distribution of the temperature inside the chamber 4.

It is possible to provide that suitable deflector members, not shown in the figures, are positioned in the areas of curvature of the distribution region 100. The deflector members facilitate the circulation of the fluid through the distribution region 100, counteracting the formation of areas of stagnation of the fluid in the path towards the cooking chamber 4.

Preferably each conveying member 14 is made of a plate, which is arranged substantially orthogonal to the rear wall 9 of the compartment 3.

Each conveying member 14 shapes a plurality of openings 15, configured to enable a uniform distribution of the flow of fluid in the cooking chamber 4, in particular along the depth of the cooking chamber 4.

The openings 15 are regularly distributed on the surface of each conveying member 14.

Preferably the openings 15 are arranged adjacent along the depth of the cooking chamber 4, that is along a direction parallel to the y axis.

At least one support element 17 is arranged on each plate 14, and is suitable for supporting a relative food containing member, such as, for example, a pan, which is not shown in the figures.

According to an embodiment, each support element 17 comprises a portion protruding from the respective plate 14, which defines a support surface for the containment member.

Preferably the apparatus comprises a plurality of support elements 17.

A set of distribution elements, not shown in the figures, which contribute to improve the distribution of the superheated steam, are mounted on opposite walls of the compartment 3, which delimit respective side portions of the distribution region, together with respective conveying members 14.

Preferably, each conveying element is made of a fin which protrudes from the compartment wall 3 towards the distribution region 100.

The fins are distributed uniformly on each wall of the compartment 3 and, in particular, are arranged adjacent along a longitudinal direction, forming a series of rows which extend substantially parallel along a transverse direction, which corresponds to the depth of the compartment.

The compartment 3 houses inside thereof a ventilation device 18.

The ventilation device 18 is arranged in the distribution region 100, preferably between the rear wall 9 of the compartment 3 and the cooking chamber 4.

The ventilation device 18 comprises a first impeller member 19, mounted on a substantially horizontal rotation shaft 20, which is driven in rotation by an actuator member 21.

The actuator member 21 includes an electric motor associated with the rear wall 9.

The first impeller member 19 comprises a discoidal body 22 from which a series of fins 23 develop, distributed on a peripheral circular rim of the discoidal body 22.

Coaxially to the first impeller member 19 a second impeller member 24 is mounted, which comprises a relative series of fins 25 which develop starting from the discoidal body 22. The fins 25 of the second rotating member 24 preferably have an extension along the y direction lower than the extension of the fins 23 of the first impeller member 19.

The provision of a pair of impeller members 19, 24 allows the fluid to circulate effectively inside the cooking chamber 4.

The ventilation device 18 creates a pressure gradient in the cooking chamber which is used to convey the exhausted steam from the chamber 4 towards the superheating device 31.

Exhausted steam means the steam, which, during the operation of the apparatus, transferred the stored energy to the food or to the cooking chamber 4.

The distribution region 100 may house a series of heating elements, for example of the type of electrical resistances, suitable for heating the fluid flowing in the distribution region 100 towards the cooking chamber 4.

The heating elements may be arranged near the ventilation device 18.

A protection member 26 is arranged in front of the ventilation device 18, which forms one of the walls of the cooking chamber 4, as already mentioned.

The protection member 26 consists of a plate on which a series of suction openings 27 of the fluid contained in the cooking chamber 4 are obtained.

More specifically, the plate 26 forms a preferably disk-shaped suction surface which includes the suction openings 27.

The suction openings 27 are shaped as portions of a circular rim and are arranged contiguous so as to form at least one circular rim. The suction openings 27 may have a different shape, for example may be shaped as slots with straight development.

Preferably the suction openings 27 arranged on the periphery of the suction surface have a larger area than the suction openings 27 arranged centrally with respect to the same surface, to facilitate suction at the end regions of the cooking chamber 4.

The suction surface extends at least up to the height of the support element 17, intended as a position along the z direction. If a plurality of support elements 17 are present, the suction surface extends at least from the height of the support element 17 positioned at one end of the relative conveying member 14, up to the support element 17 positioned at an opposite end of the conveying member 14.

The feature relating to the extension of the suction surface has the effect of facilitating the suction of the fluid at the pans positioned at the ends of the conveying members 14.

A substantially truncated cone-shaped element is associated at the rear of the plate 26, and is positioned in front of the ventilation device 18 and contributes to facilitate the aspiration by the ventilation device 18.

The cooking chamber 4 is associated with a cooling conduit 28, which protrudes, at least in part, outside the casing 2, to allow the entry of air from the external environment into the cooking chamber 4 and allow the cooling of the chamber 4.

The cooling conduit 28 is connected to an opening 29 made on the rear wall 9 of the cooking chamber 4, preferably near the ventilation device 18.

The cooling conduit 28 is provided with an adjustment member, not visible in the figures, which is operated by a control unit between an opening configuration, in which it allows the passage of air in the cooling conduit 28 towards the cooking chamber 4, and a closing configuration, in which the passage of air is blocked.

The control unit, also not visible in the figures, is designed for managing the apparatus, and is configured to send command signals to a steam generating device 30 and to a superheating device 31.

The control unit comprises an electronic processor and a memory readable by the electronic processor.

According to an embodiment of the invention, the control unit is configured to receive data from sensor means and, on the basis of the data, generate the command signals. The data sent by the sensor means may be stored in the memory.

The sensor means, not shown, may be configured to acquire data relating to predetermined fluid dynamic characteristics of the fluid, such as, for example, the temperature, and/or data relating to the composition of the fluid, such as, for example, the percentage of oxygen.

The sensor means comprise, for example, at least one temperature sensor and at least one oxygen sensor.

The memory is also capable of storing data relating to the phases of at least one cooking method implemented by the apparatus, for example for the duration of the phases of a cooking method. The cooking method includes a method for generating steam, as better explained below.

In this way, the control unit may control the operation of the steam generating device 30 and the superheating device 31 on the basis of these data relating to the time intervals of the cooking method phases.

The cooking chamber 4 is provided with a first exhaust opening 32, for the oxygen to come out from the cooking chamber 4 towards the outside, at an early cooking phase.

The first exhaust opening 32 is preferably positioned on the top wall 6 of the chamber 4. An exhaust conduit is connected to the first exhaust opening 32, not illustrated in the figures.

A second exhaust opening 33 is made on a wall of the cooking chamber 4, to release the condensed steam or liquid materials deriving from the food outwards.

Preferably the base 5 of the cooking chamber 4 has a portion with a downward inclination and, approximately at the center of the inclined portion, the second exhaust opening 33 is positioned, which collects the liquid material to convey it, by means of a special conduit, towards a collection means, not illustrated.

The collection means comprise a tank placed below the base 5.

Preferably, the tank is connected to the exhaust conduit, by means of special connection means, so as to direct the oxygen collected in the tank into the exhaust conduit so that it is expelled outwards.

In fact, it has been experimentally observed that oxygen has a higher density than that of superheated steam and tends to accumulate in an area arranged below, in use, that is near the base 5 of the cooking chamber 4. The provision of connection means which connect the tank with the exhaust conduit enables the collection of the oxygen that enters into the tank through the second exhaust opening 33 and expel it.

Steam is introduced into the compartment 3 through at least one inlet opening 34, formed on the rear wall 9. The inlet opening 34 may be made near the ventilation device 18.

The steam is produced by the steam generating device 30, which is able to vaporize a liquid contained inside it.

Preferably the liquid used is water.

The steam generating device 30 is associated with the casing 2. More specifically, the steam generating device 30 is housed in a region between the rear wall 9 of the compartment 3 and the casing 2.

The steam generating device 30 comprises a box-like body 35 which houses, inside thereof, one or more heating elements 36.

The body 35 internally forms a compartment, capable of receiving a predetermined quantity of liquid, in which the heating elements 36 are arranged.

Preferably, the heating elements 36 are made of electrical resistances.

The electric resistances 36 are connected to respective terminals 37 to allow the supply of electric energy.

Each electric resistance 36 has substantially flat spiral shape. The spiral shape of the electric resistances 36 allows an adequate ratio between the generated power and the volume of introduced liquid to be obtained. The value of that ratio, just in case the liquid used is water, is at least 8 W/gr of water.

The electrical resistances 36 are aligned along a longitudinal direction and are equally spaced apart. More particularly, the electric resistances 36 are arranged alternating with respective thermally conductive elements 38.

Preferably, the electric resistances 36 are alternated with respective thermally conductive elements 38 so that a stacked configuration is obtained. The stacked configuration is compact and particularly advantageous as it allows the volume that may be occupied by the liquid to keep the heating elements submerged, to be to reduced. By decreasing the amount of liquid, the time required to generate steam is reduced and this enables the oxygen to be quickly replaced with steam in the cooking chamber.

Each thermally conductive element 38 is made of a plate which extends on a plane transverse to the body 35.

Each thermally conductive element 38 forms a seat for housing the relative electrical resistance 36. Preferably each seat has a shape conjugated to the electric resistance 36.

Preferably each thermally conductive element 38 is made of metallic material.

The conductive elements 38 are heated, in a start phase of the apparatus, by the electric resistances 36, to store a predetermined amount of energy, which is used to generate steam quickly starting from the liquid introduced into the box-shaped body 35 and therefore quickly replace the oxygen initially present in the cooking chamber 4. It is to be noted that the time in which the replacement of oxygen with the steam produced by contact of the liquid with the thermally conductive elements 38 takes place is less than one minute from the start of the cooking phase.

The steam generating device 30 comprises a member detecting the liquid level so as to monitor that the quantity of liquid introduced into the body 35 in use does not exceed the maximum permitted value.

It is possible to provide that the apparatus includes an additional steam generating device, not shown, which is capable of being activated to generate steam, if necessary.

The steam generating device 30 is associated with the superheating device 31, which is configured to heat the steam up to an operating temperature T higher than the boiling temperature of the liquid used.

Operating temperature T means the temperature at which the steam is introduced into the cooking chamber 4, which is approximately between 130° C and 600° C.

The superheating device 31 is placed in communication with the cooking chamber 4 to introduce the superheated steam into the cooking chamber 4, through the inlet opening 34.

The superheating device 31 comprises a containment body 39 comprising inside at least one channel for the passage of the steam.

According to an embodiment, the containment body 39 is substantially cylindrical and is internally hollow.

Preferably, the superheating device 31 is inclined with respect to a substantially horizontal plane to facilitate the flow of the liquid coming from the condensation of the steam, in a mounting configuration.

Preferably the containment body 39 is made of a metallic material.

The containment body 39 comprises a support member 40, which also has preferably substantially cylindrical shape and is made of a non-electrically conductive material.

The support member 40 may be made, for example, of a ceramic material.

The support member 40 is inserted inside the containment body 39 and is spaced from the internal wall of the containment body 39, defining a meatus.

The support member 40 is connected to a closing element not visible in the figures, for example made of a flange, which is arranged at one end of the containing body 39.

The support member 40 has at least one through channel 41, through which the passage of steam takes place. At least one through channel 41 preferably extends from one end of the support member 40 to an opposite end.

The support member 40 has a series of channels 41 which extend along a longitudinal direction of the support 40. These channels 41 are regularly placed in the support member 40, for example they may be arranged on the periphery of the support 40.

The channels 41 are open from the side of the external surface of the support member 40 and are communicating with the meatus. The channels 41 therefore form a series of grooves on the external surface of the support 40.

According to a different embodiment, each channel 41 is closed laterally, that is surrounded laterally by the non-conductive material of the support 40.

The channels 41 preferably have a cylindrical shape.

The superheating device 31 comprises at least one electrically conductive element, not visible in the figures.

The at least one electrically conductive element is arranged in the channels 41 of the support member 40.

The electrically conductive element includes an electrically conductive filament. More specifically, the electrically conductive element consists of an electrically conductive filament.

Preferably the electrically conductive filament is made of a metal material or an alloy of metals.

Preferably the metal alloy used is the Nickel-Chrome alloy. Even more preferably, the filament is made of 80% Nickel and 20% Chrome alloy.

The filament is inserted in the channels 41, in particular the filament comprises a series of longitudinal sections that run along relative channels 41 for the entire length, and a series of transversal sections which connect the adjacent longitudinal sections.

The filament is connected, by means of special terminals 42, to a source of electrical energy to be heated to a temperature such as to emit electromagnetic radiation which allow the steam to be heated up to the operating temperature T by irradiation. It must be noted that the filament in use quickly reaches a temperature suitable for the emission of electromagnetic radiation, reducing the time required to heat the steam.

The filament emits radiation with a wavelength within the infrared wavelength range.

It is to be noted that the filament reaches temperatures of about 1100° C in an optimized time interval of about 7 seconds.

In the case of the embodiment which provides the respective channels 41 forming grooves, it is possible that a series of spacer elements 43 are arranged in the meatus, between the external surface of the support 40 and the internal surface of the containing body 39. The spacer elements 43 prevent contact from being established between the electrically conductive filament and the containing body 39, in the presence of any condensation drops of the steam.

The internal surface of the containment body 39 is subjected to a surface treatment which makes it reflective. The surface treatment is, for example, electrolytic polishing. The reflective surface increases the efficiency of the heat exchange as it limits the dispersion of energy towards the outside of the superheating device 31.

In addition to the steam generated by the steam generating device 30, the superheating device 31 also receives the exhausted steam produced in the cooking chamber 4 during operation.

More specifically, the apparatus comprises recirculation means 44, communicating with the cooking chamber 4, which are configured to convey the exhausted steam from the cooking chamber 4 to the superheating device 31, so that the exhausted steam is heated up to the operating temperature T and then inserted again into the cooking chamber 4.

The recirculation means 44 are arranged in the casing 2 and include a recirculation conduit 45, which allows the exhausted steam to flow from the cooking chamber 4 towards the superheating device 31.

The recirculation conduit 45 is connected, at one end, with a recovery opening 46, made on a wall of the cooking chamber 4.

At the opposite end, the recirculation conduit 45 is connected to a connection conduit 47, which conducts the steam entering the superheating device 31.

A further conduit is connected to the connection conduit 47, which transports the steam from the steam generating device 30 to the superheating device 31.

It is possible to provide that the recirculation conduit 45 is connected directly to the superheating device 31.

The recovery opening 46 is obtained on a wall of the cooking chamber 4, in a region of the chamber in which the fluid has worse predetermined thermo-fluid dynamic characteristics than the fluid dynamic characteristics of the fluid in the remaining regions of the chamber, during an operating step of the apparatus.

Preferably said thermo-fluid dynamic characteristics include the temperature of the fluid and/or the average speed of the fluid and/or the percentage of oxygen.

From the results of fluid dynamic studies on the fluid circulating in the cooking chamber, in a steady-state operating step, it has been observed that the exhausted steam is concentrated in the region or regions where the thermo-fluid dynamic characteristics of the fluid are worse than the corresponding characteristics of the fluid in the remaining regions of the chamber.

It is possible to divide the chamber 4 into a series of regions, characterized by different average values of the thermo-fluid dynamic characteristics of the fluid.

The recovery opening 46 is made, for example, in the region or in one of the regions having the lowest average speed value with respect to the average speed values in the remaining regions of the chamber.

According to an embodiment of the invention, the recovery opening 46 is obtained on the top wall 6 of the cooking chamber 4. In particular, the recovery opening 46 is made close to one side of the top wall 6 opposite to the connection side with the rear wall 9.

It has been observed in the aforementioned fluid dynamic studies that the positioning of the first exhaust opening 32 and the recovery opening 46 in the regions of the cooking chamber 4, in which the average speed of the fluid is lower, prevents the formation of areas of stagnation in chamber 4 and promotes the circulation of the fluid.

The recirculation conduit 45 comprises a first portion, which develops starting from the recovery opening 46 above the cooking chamber 4, and a second portion, which extends in the region of the casing 2 comprised between the rear wall 9 of the compartment 3 and the casing 2.

A valve means, not shown, suitable for adjusting, on command of the control unit, the quantity of exhausted steam which is conducted to the inlet to the superheating device 31 may be associated with the recirculation conduit 45.

The valve means are movable, on command of the control unit, between an opening configuration, in which they allow the passage of the exhausted steam from the cooking chamber 4 to the superheating device 31, and a closing configuration, in which they block the passage of the exhausted steam to the superheating device 31.

Preferably, the valve means comprise a valve provided with a shutter which may be actuated by the control unit to adjust the quantity of exhausted steam which passes through the recirculation conduit 45.

The operation of the apparatus for cooking food with superheated steam is easily understood from the foregoing description. At an early stage, a user proceeds to switch on the apparatus through the control panel, and, if the steam cooking mode is selected, the control unit activates the steam generating device 30 to store a predetermined quantity of energy to be used, in a subsequent step, for generating the steam to be introduced into the cooking chamber 4.

The step of activating the steam generating device 30 provides for supplying the heating elements 36 to heat the thermally conductive elements 38 and storing in the thermally conductive elements 38 the energy that will be used, subsequently, to generate steam.

The heating of the conductive elements 38 is carried out for an interval of time sufficient to allow the achievement of a suitable temperature T1. Preferably the temperature T1 is between 100° C and 600° C. Even more preferably, the temperature T1 is lower than the Leidenfrost temperature.

The supply of the heating elements 36 is interrupted when the aforementioned temperature T1 of the thermally conductive elements 38 is reached, and this is signaled by a warning signal.

The warning signal may be visible, for example, in the control panel, to promptly inform the user that the apparatus is ready for use.

The user then inserts one or more food to be cooked or heated inside the cooking chamber 4, through the access opening 11, placing them resting on at least one pan.

The user then closes the door 12, in order to isolate the cooking chamber 4 from the external environment, and the control unit activates again the steam generating device 30 to generate the steam. The steam generating step involves feeding the electric resistances 36 and inserting a liquid inside the device until a maximum quantity of liquid is reached.

The step of inserting the liquid is carried out discontinuously and between one liquid injection and the next injection a first time interval Δt1 lapses.

Preferably the first time interval Δt1 is between 1 and 60 seconds.

Each injection of liquid takes place in a second time interval Δt2.

Preferably the second time interval Δt2 is between 1 and 60 seconds.

The values of the above time intervals are stored in the memory of the control unit.

Steam is generated initially by direct contact of the liquid with the previously heated thermally conductive elements 38.

After a predetermined time interval Δt3 from the beginning of the step of injection of liquid and before the end of the step of injection of liquid, the steam is generated by direct contact of the liquid with the thermally conductive elements 38 and by boiling the liquid.

The boiling of the liquid takes place mainly thanks to the energy transferred by the heating elements 36 to the liquid.

In this steam generating step, the synergistic action of the heating elements 36 and of the thermally conductive elements 38 is exploited.

Preferably said predetermined time interval Δt3 from the beginning of the step of injection of liquid is between 30 and 80 seconds.

At the end of the step of injection of liquid, the steam is generated by boiling the liquid by the heating elements 36. The thermally conductive elements 38 contribute to the boiling by transferring the remaining energy to the liquid.

The produced steam flows into the superheating device 31 and, when passing through the device 31, is heated by irradiation by the electrically conductive filament up to an operating temperature T.

Preferably the steam is heated to an operating temperature T between 130° C and 600° C.

The superheated steam passes through the inlet opening 34 in the cooking chamber 4 and is distributed in the chamber 4 independently or by the action of the ventilation device 18.

The superheated steam in the cooking chamber 4 replaces, completely or for the most part, initially present oxygen, which is expelled out of the cooking chamber 4 through the first discharge opening 32.

In an operating step of the apparatus, essentially steam or steam mixed with further gases, such as nitrogen and oxygen, may be present inside the chamber 4.

Reference is made below only to the exhausted superheated steam as the fluid recovered from the recirculation means, considering however that the recovered fluid may comprise steam together with further gases, as specified above.

The exhausted superheated steam is conducted, thanks to the pressure gradient generated by the action of the ventilation device 18, inside the recirculation conduit 45 to be conveyed to the inlet of the superheating device 31. The exhausted steam passes through the superheating device 31 to be heated up to the operating temperature T again.

The quantity of exhausted steam entering the superheating device may be controlled by the control unit through the valve means.

The control unit constantly monitors the quantity of steam necessary to cook the food on the basis of the data it receives from the sensor means and/or according to the data relating to the duration of the cooking process steps stored in the memory, and controls the supplying of the steam generating device 30, as well as the superheating device 31, so as to have an adequate supply of superheated steam in the cooking chamber 4.

Before the end of the cooking step, the chamber 4 is dried in order to allow easy extraction of the food.

The drying step provides for operating the adjusting member of the cooling conduit 28, to allow the entry of air from the outside towards the inside of the chamber 4, through the cooling conduit 28.

The apparatus object of the present invention achieves the aim of optimally preserving the nutritional properties of foods and their healthiness thanks to the provision of a superheating device comprising an electrically conductive element, associated with a non-conductive support, which is electrically powered, in use, until reaching a temperature such that the steam is heated by irradiation and to the provision of a steam generation device, which includes at least one heating element and at least one thermally conductive element since their combination significantly reduces the time required to replace oxygen with steam in the cooking chamber. In particular, the heating of the steam by irradiation enabled by the superheating device has the effect of reducing the time to heat the steam up to the operating temperature and the thermally conductive element, heated by the heating element, enables the steam to be produced by direct contact with the liquid, decreasing the time necessary for the generation of steam, especially in an initial cooking phase.

The advantageous combination of the steam generating device and the superheating device reduces the time necessary for the expulsion of oxygen from the cooking chamber, in an initial phase and, consequently, helps to eliminate or limit the oxidation of some food components, such as, for example, vitamins and polyphenols, preserving the healthiness of foods.

In addition, the reduction of time to obtain superheated steam leads to greater efficiency of the apparatus.

The apparatus also optimally preserves the nutritional properties of foods and their healthiness thanks to the fact that cooking with superheated steam is implemented.

It is to be noted that the use of an electrically conductive filament has the effect of optimizing the time for reaching a temperature suitable for heating the steam by irradiation.

It should also be noted that the superheater device has compact size and small footprint.

The apparatus described by way of example is subject to changes according to different needs.

In the practical embodiment of the invention, the materials used, as well as the shape and the dimensions, may be modified depending on requirements.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. An apparatus for cooking food with superheated steam comprising an outer casing (2), which comprises inside it a cooking chamber (4), adapted to contain one or more foods;
a steam generating device (30) associated with said casing (2), adapted to vaporize a liquid, said steam generating device (30) comprising a body (35) comprising at least one heating element (36) and at least one thermally conductive element (38), said at least one heating element (36) being adapted to heat said liquid inserted, in use, inside said steam generating device (30), said heating element (36) also being adapted to heat said thermally conductive element (38) so as to store in said thermally conductive element (38) a predetermined amount of energy to be used to generate steam;
a superheating device (31) of said steam, associated with said steam generation device (30), said superheating device (31) being configured to heat said steam to an operating temperature (T), which is higher than the boiling temperature of said liquid and to allow said superheated steam to come out towards said cooking chamber (4), said superheating device (31) comprising a containment body (39), a support member (40) made of a non-electrically conductive material, which is arranged inside said containment body (39), said support member (40) having at least one channel (41) passing through said support member (40), to allow the passage of said steam, at least one electrically conductive element arranged in said at least one channel (41) of said support member (40), said at least one electrically conductive element being fed, in use, by an electric power source to be heated to a temperature such as to emit electromagnetic radiations, said steam being heated, in use, by said electromagnetic radiation by irradiation.

2. An apparatus as in claim 1, **characterized in that** said electrically conductive element comprises an electrically conductive filament made of a metallic material, preferably of an alloy of metals.

3. An apparatus as in claim 1 or 2, **characterized in that** said at least one electrically conductive element emits, in use, electromagnetic radiation having a wavelength in the infrared range.

4. An apparatus as in any one of the preceding claims, **characterized in that** said support member (40) has a plurality of channels (41) passing through said support member (40) in order to allow the passage of said steam.

5. An apparatus as in claim 4, **characterized in that** said at least one electrically conductive element is housed in said channels (41) of support member (40), said at least one electrically conductive element comprising a series of longitudinal sections passing through relative said channels (41) and a series of transverse sections, which connect the adjacent longitudinal sections.

6. An apparatus as in claim 4 or 5, **characterized in that** said channels (41) shape respective grooves on an outer surface of said support member (40).

7. An apparatus as in claim 6, **characterized in that** it comprises at least one spacer element (43), placed between said support member (40) and an inner surface of said containment body (39) so as to prevent a contact is established between said electrically conductive element and said containment body (39).

8. An apparatus as in claim 4 or 5, **characterized in that** said channels (41) are closed laterally.

9. An apparatus as in any one of the preceding claims, **characterized in that** said containment body (39) comprises a surface facing towards said support member (40) which is reflective, at least for a portion, in order to reflect the radiations emitted by said electrically conductive element, in use, and limit the outward energy dispersions.

10. An apparatus as in any one of the preceding claims, **characterized in that** said steam generating device (30) is associated with said superheating device (31) through connection means suitable to allow the passage of said steam from said steam generating device (30) to said superheating device (31).

11. An apparatus as in any one of the preceding claims, **characterized in that** each said heating element (36) of said steam generating device (30) comprises an electric resistance.

12. An apparatus as in claim 11, **characterized in that** each said electric resistance has a substantially flat spiral shape.

13. An apparatus as in claim 11 or 12, **characterized in that** said body (35) of said steam generating device (30) comprises a plurality of electric resistances (36), arranged alternating with the respective thermally conductive elements (38) so that a stack is formed.

14. An apparatus as in any one of the preceding claims, **characterized in that** each said thermally conductive element (38) is made of a plate which extends transversely to said body (35).

15. An apparatus as in any one of the preceding claims, **characterized in that** it includes recirculation means (44) of the exhausted steam present, in use, in said cooking chamber (4), said recirculation means (44) being communicating with said cooking chamber (4) and being configured to convey said exhausted steam from said cooking chamber (4) to said superheating device (31), so that said exhausted steam is heated up to said operating temperature and inserted into said cooking chamber (4).

## Patentansprüche

1. Gerät zum Garen von Lebensmitteln mit überhitztem Dampf, umfassend eine Außenhülle (2), die darin eine Garkammer (4) umfasst, die dazu angepasst ist, ein oder mehrere Lebensmittel zu enthalten;
eine Dampferzeugungsvorrichtung (30), die dem Gehäuse (2) zugeordnet ist und dazu angepasst ist, eine Flüssigkeit zu verdampfen, wobei die Dampferzeugungsvorrichtung (30) einen Körper (35) umfasst, der mindestens ein Heizelement (36) und mindestens ein wärmeleitendes Element (38) umfasst, wobei das mindestens eine Heizelement (36) dazu angepasst ist, die in die Dampferzeugungsvorrichtung (30) eingeführte Flüssigkeit bei Verwendung zu erhitzen, wobei das Heizelement (36) auch dazu angepasst ist, das wärmeleitende Element (38) zu erhitzen, um eine vorbestimmte Energiemenge, die zum Erzeugen von Dampf verwendet werden soll, in dem wärmeleitenden Element (38) zu speichern;
eine Überhitzungsvorrichtung (31) des Dampfes, die der Dampferzeugungsvorrichtung (30) zugeordnet ist, wobei die Überhitzungsvorrichtung (31) dazu konfiguriert ist, den Dampf auf eine Betriebstemperatur (T) zu erhitzen, die höher als die Siedetemperatur der Flüssigkeit ist, und zu erlauben, dass der überhitzte Dampf in Richtung der Garkammer (4) austritt, wobei die Überhitzungsvorrichtung (31) einen Einschlusskörper (39), ein Trägerelement (40), das aus einem elektrisch nicht leitenden Material hergestellt ist, das innerhalb des Einschlusskörpers (39) angeordnet ist, umfasst, wobei das Trägerelement (40) mindestens einen Kanal (41) aufweist, der durch das Trägerelement (40) hindurchgeht, um das Durchgehen des Dampfes zu erlauben, wobei mindestens ein elektrisch leitendes Element in dem mindestens einen Kanal (41) des Trägerelements (40) eingerichtet ist, wobei das mindestens eine elektrisch leitende Element bei Verwendung durch eine elektrische Stromquelle gespeist wird, um auf eine Temperatur derart erhitzt zu werden, dass elektromagnetische Strahlungen emittiert wird, wobei der Dampf bei Verwendung von der elektromagnetischen Strahlung durch Bestrahlen erhitzt wird.

2. Gerät nach Anspruch 1, **dadurch gekennzeichnet, dass** das elektrisch leitende Element ein elektrisch leitendes Filament umfasst, das aus einem metallischen Material, bevorzugt aus einer Legierung von Metallen, hergestellt ist.

3. Gerät nach Anspruch 1 oder 2, **dadurch gekennzeichnet, dass** das mindestens eine elektrisch leitende Element bei Verwendung elektromagnetische Strahlung emittiert, die eine Wellenlänge in dem Infrarotbereich aufweist.

4. Gerät nach einem der vorstehenden Ansprüche, **dadurch gekennzeichnet, dass** das Trägerelement (40) eine Vielzahl von Kanälen (41) aufweist, die durch das Trägerelement (40) durchgehen, um den Durchgang des Dampfes zu erlauben.

5. Vorrichtung nach Anspruch 4, **dadurch gekennzeichnet, dass** das mindestens eine elektrisch leitende Element in den Kanälen (41) des Trägerelements (40) untergebracht ist, wobei das mindestens eine elektrisch leitende Element eine Reihe von Längsabschnitten, die durch die Kanäle (41) durchgehen, und eine Reihe von Querabschnitten, die die aneinandergrenzenden Längsabschnitte verbinden, umfasst.

6. Gerät nach Anspruch 4 oder 5, **dadurch gekennzeichnet, dass** die Kanäle (41) jeweilige Nuten an einer Außenoberfläche des Trägerelements (40) formen.

7. Gerät nach Anspruch 6, **dadurch gekennzeichnet, dass** es mindestens ein Abstandselement (43) umfasst, das zwischen dem Trägerelement (40) und einer Innenoberfläche des Aufnahmekörpers (39) platziert ist, um zu verhindern, dass ein Kontakt zwischen dem elektrisch leitenden Element und dem Einschlusskörper (39) hergestellt wird.

8. Gerät nach Anspruch 4 oder 5, **dadurch gekennzeichnet, dass** die Kanäle (41) seitlich geschlossen sind.

9. Vorrichtung nach einem der vorstehenden Ansprüche, **dadurch gekennzeichnet, dass** der Einschlusskörper (39) eine Oberfläche umfasst, die dem Trägerelement (40) zugewandt ist, die mindestens für einen Abschnitt reflektierend ist, um die von dem elektrisch leitenden Element bei Verwendung emittierten Strahlungen zu reflektieren und die nach außen gerichteten Energiedispersionen einzuschränken.

10. Gerät nach einem der vorstehenden Ansprüche, **dadurch gekennzeichnet, dass** die Dampferzeugungsvorrichtung (30) der Überhitzungsvorrichtung (31) durch Verbindungsmittel zugeordnet ist, die geeignet sind, den Durchgang des Dampfes von der Dampferzeugungsvorrichtung (30) zu der Überhitzungsvorrichtung (31) zu erlauben.

11. Gerät nach einem der vorstehenden Ansprüche, **dadurch gekennzeichnet, dass** das Heizelement (36) der Dampferzeugungsvorrichtung (30) einen elektrischen Widerstand umfasst.

12. Gerät nach Anspruch 11, **dadurch gekennzeichnet, dass** jeder elektrische Widerstand eine im Wesentlichen flache Spiralform aufweist.

13. Gerät nach Anspruch 11 oder 12, **dadurch gekennzeichnet, dass** der Körper (35) der Dampferzeugungsvorrichtung (30) eine Vielzahl von elektrischen Widerständen (36) umfasst, die abwechselnd mit den jeweiligen wärmeleitenden Elementen (38) derart eingerichtet sind, dass ein Stapel gebildet wird.

14. Gerät nach einem der vorstehenden Ansprüche, **dadurch gekennzeichnet, dass** jedes wärmeleitende Element (38) aus einer Platte hergestellt ist, die sich quer zu dem Körper (35) erstreckt.

15. Gerät nach einem der vorstehenden Ansprüche, **dadurch gekennzeichnet, dass** es ein Rezirkulationensmittel (44) des verbrauchten Dampfes, der bei Verwendung in der Garkammer (4) vorhanden ist, beinhaltet, wobei das Rezirkulationensmittel (44) mit der Garkammer (4) verbunden und dazu konfiguriert ist, den verbrauchten Dampf aus der Garkammer (4) zu der Überhitzungsvorrichtung (31) derart zu fördern, dass der verbrauchte Dampf auf die Betriebstemperatur (T) erhitzt und in die Garkammer (4) eingeführt wird.

## Revendications

1. Appareil pour cuire des aliments avec de la vapeur surchauffée comprenant un boîtier (2) externe, qui comprend à l'intérieur une chambre de cuisson (4), adaptée pour contenir un ou plusieurs aliments ;
un dispositif de génération de vapeur (30) associé audit boîtier (2), adapté pour vaporiser un liquide, ledit dispositif de génération de vapeur (30) comprenant un corps (35) comprenant au moins un élément chauffant (36) et au moins un élément thermiquement conducteur (38), ledit au moins un élément chauffant (36) étant adapté pour chauffer ledit liquide inséré, lors de l'utilisation, à l'intérieur dudit dispositif de génération de vapeur (30), ledit élément chauffant (36) étant également adapté pour chauffer ledit élément thermiquement conducteur (38) de manière à stocker dans ledit élément thermiquement conducteur (38) une quantité prédéterminée d'énergie à utiliser pour générer de la vapeur ;
un dispositif de surchauffe (31) de ladite vapeur, associé audit dispositif de génération de vapeur (30), ledit dispositif de surchauffe (31) étant configuré pour chauffer ladite vapeur à une température de fonctionnement (T), qui est supérieure à la température d'ébullition dudit liquide et pour permettre à ladite vapeur surchauffée de sortir vers ladite chambre de cuisson (4), ledit dispositif de surchauffe (31) comprenant un corps de confinement (39), un élément de support (40) constitué d'un matériau non électriquement conducteur, qui est agencé à l'intérieur dudit corps de confinement (39), ledit élément de support (40) ayant au moins un canal (41) traversant ledit élément de support (40), pour permettre le passage de ladite vapeur, au moins un élément électriquement conducteur agencé dans ledit au moins un canal (41) dudit élément de support (40), ledit au moins un élément électriquement conducteur étant alimenté, lors de l'utilisation, par une source d'énergie électrique pour être chauffé à une température telle qu'il émette des rayonnements électromagnétiques, ladite vapeur étant chauffée, lors de l'utilisation, par ledit rayonnement électromagnétique par irradiation.

2. Appareil selon la revendication 1, **caractérisé en ce que** ledit élément électriquement conducteur comprend un filament électriquement conducteur constitué d'un matériau métallique, de préférence d'un alliage de métaux.

3. Appareil selon la revendication 1 ou 2, **caractérisé en ce que** ledit au moins un élément électriquement conducteur émet, lors de l'utilisation, un rayonnement électromagnétique ayant une longueur d'onde dans la plage infrarouge.

4. Appareil selon l'une quelconque des revendications précédentes, **caractérisé en ce que** ledit élément de support (40) comporte une pluralité de canaux (41) traversant ledit élément de support (40) afin de permettre le passage de ladite vapeur.

5. Appareil selon la revendication 4, **caractérisé en ce que** ledit au moins un élément électriquement conducteur est logé dans lesdits canaux (41) de l'élément de support (40), ledit au moins un élément électriquement conducteur comprenant une série de sections longitudinales traversant lesdits canaux (41) relatifs et une série de sections transversales, qui relient les sections longitudinales adjacentes.

6. Appareil selon la revendication 4 ou 5, **caractérisé en ce que** lesdits canaux (41) forment des rainures respectives sur une surface externe dudit élément de support (40).

7. Appareil selon la revendication 6, **caractérisé en ce qu'**il comprend au moins un élément d'espacement (43), placé entre ledit élément de support (40) et une surface interne dudit corps de confinement (39) de manière à empêcher qu'un contact ne soit établi entre ledit élément électriquement conducteur et ledit corps de confinement (39).

8. Appareil selon la revendication 4 ou 5, **caractérisé en ce que** lesdits canaux (41) sont fermés latéralement.

9. Appareil selon l'une quelconque des revendications précédentes, **caractérisé en ce que** ledit corps de confinement (39) comprend une surface tournée vers ledit élément de support (40) qui est réfléchissante, au moins pour une partie, afin de réfléchir les rayonnements émis par ledit élément électriquement conducteur, lors de l'utilisation, et de limiter les dispersions d'énergie vers l'extérieur.

10. Appareil selon l'une quelconque des revendications précédentes, **caractérisé en ce que** ledit dispositif de génération de vapeur (30) est associé audit dispositif de surchauffe (31) par l'intermédiaire de moyens de liaison appropriés pour permettre le passage de ladite vapeur dudit dispositif de génération de vapeur (30) audit dispositif de surchauffe (31).

11. Appareil selon l'une quelconque des revendications précédentes, **caractérisé en ce que** chacun desdits éléments chauffants (36) dudit dispositif de génération de vapeur (30) comprend une résistance électrique.

12. Appareil selon la revendication 11, **caractérisé en ce que** chacune desdites résistances électriques a une forme de spirale sensiblement plate.

13. Appareil selon la revendication 11 ou 12, **caractérisé en ce que** ledit corps (35) dudit dispositif de génération de vapeur (30) comprend une pluralité de résistances électriques (36), agencées en alternance avec les éléments thermiquement conducteurs (38) respectifs de sorte qu'un empilement soit formé.

14. Appareil selon l'une quelconque des revendications précédentes, **caractérisé en ce que** chacun desdits éléments thermiquement conducteurs (38) est constitué d'une plaque qui s'étend transversalement audit corps (35).

15. Appareil selon l'une quelconque des revendications précédentes, **caractérisé en ce qu'**il comporte des moyens de recirculation (44) de la vapeur évacuée présente, lors de l'utilisation, dans ladite chambre de cuisson (4), lesdits moyens de recirculation (44) étant en communication avec ladite chambre de cuisson (4) et étant configurés pour transporter ladite vapeur évacuée à partir de ladite chambre de cuisson (4) jusqu'audit dispositif de surchauffe (31), de sorte que ladite vapeur évacuée soit chauffée jusqu'à ladite température de fonctionnement et insérée dans ladite chambre de cuisson (4).
